# EUROPEAN PATENT APPLICATION

(11) **EP 2 397 672 A2**
(43) Date of publication of application: **21.12.2011**
(21) Application number: 11004848.5
(22) Date of filing: 14.06.2011
(51) Int. Cl.: F02C 7/10, F28D 17/00, F28D 20/00

(54) **Regenerator, regeneration process, and liquid polymer mixture for a regenerator**

(30) Priority: 17.06.2010 US 817583
(71) Applicant: Air Products and Chemicals, Inc., Allentown, PA 18195-1501 (US)
(72) Inventor: Xu, Jianguo, 18940 Wrightstown PA (US); Rajaraman, Suresh K., 18062 Macungie PA (US); Vero, Robert, 18049 Emmaus PA (US); Jin, Bo, 18069 Orefield PA (US)
(74) Representative: Kador & Partner

(57) **Abstract**

Disclosed is a regenerator (40), a regeneration process, and a liquid polymer mixture for periodic cooling, storing, and heating of atmospheric gas (110). The regenerator (40), the regeneration process, and the liquid polymer mixture involve a liquid polymer that remains in contact with a thermally conductive solid material (140) during a first operational period and a second operational period of a regeneration process.

## Description

The present invention is directed to a regenerator, a regeneration process, and a liquid polymer mixture for a regenerator. More specifically, the present invention is directed to a regenerator, a regeneration process, and a liquid polymer mixture for a regenerator wherein a liquid polymer substantially remains in contact with a thermally conductive solid material.

### BACKGROUND OF THE INVENTION

Known regenerators can cool compressed air obtained during off-peak electricity demand hours (off-peak hours) and vaporize the compressed air under pressure during peak electricity demand hours (peak-hours). The compressed air can be used in a gas turbine generation system.

Hitachi (Hidefumi Araki, Mitsugu Nakabaru, and Kooichi Chino, Heat Transfer-Asian Research, 31 (4), 2002), which is hereby incorporated by reference in its entirety, describes high pressure air being sent to a combustor of a gas turbine during peak hours. Such a cycle involves a precooled regenerator. Precooling may be achieved by vaporization of liquefied natural gas. In some areas, liquefied natural gas may be unavailable. In addition, as a combustible gas, liquefied natural gas involves safety concerns for storage and transport, and more importantly, the heat exchange of liquefied natural gas, a combustible material, with an oxidizing gas (for example, air). Additionally, Hitachi discusses extended cooling by including a regeneration medium such as pebbles or concrete. As such, operation of the precooled regenerator, as disclosed in Hitachi, can result in the regenerator warming up over cycles if the pressure of the air being cooled is the same as or similar to that of the air being heated, so such a process is not sustainable. If the pressure of the air to be heated is much lower than that of the air being cooled, the process becomes rather inefficient.

Hitachi describes a regenerator with metal tubes contained in a concrete block. This regenerator separates a high pressure / low temperature stream from a heat capacitor (for example, the concrete) of the regenerator. However, peeling off of the concrete heat capacitor from the metal tubes over the life of the regenerator can occur. This peeling off can occur by the contact between the concrete block and the metal tubes or due to expansion and contraction emphasized by very different thermal expansion coefficients of concrete and metal. This peeling off creates a gap that can severely reduce heat transfer between a tube outer wall and the concrete.

What is needed is a regenerator, a regeneration method, and a mixture capable of permitting a heat capacitor material to be substantially resistant to peeling off from a thermally conductive solid material.

### SUMMARY OF THE INVENTION

One aspect of the present disclosure includes a regenerator for periodic cooling, storing, and heating of atmospheric gas. The regenerator includes a vessel, a liquid polymer within the vessel, and a thermally conductive solid material arranged and disposed to separate the liquid polymer from a fluid to be heated, cooled, or heated and cooled within the vessel. The liquid polymer remains in contact with the thermally conductive solid material during a first operational period and a second operational period of a regeneration process.

Another aspect of the present disclosure includes a regeneration process for periodic cooling, storing, and heating of atmospheric gas. The process includes directing a first stream to a regenerator for cooling to form a cooled stream during a first operational period and directing a second stream to the regenerator for heating to form a heated stream during a second operational period. The regenerator includes a vessel, a liquid polymer within the vessel, and a thermally conductive solid material arranged and disposed to separate the liquid polymer from a fluid to be heated, cooled, or heated and cooled within the vessel. The liquid polymer remains in contact with the thermally conductive solid material during the first operational period and the second operational period of the regeneration process.

Another aspect of the present disclosure includes a liquid polymer mixture for a regenerator. The liquid polymer mixture includes a liquid polymer and heat capacitor materials, selected from the group consisting of pebbles, sand, and a combination thereof. The liquid polymer remains in contact with the thermally conductive solid material during a first operational period and a second operational period of a regeneration process.

An advantage of the present disclosure includes extended life of the regenerator by reduced or eliminated peeling off and/or gap formation relative to the heat capacitor contact with regenerator tubes that reduces heat transfer.

Another advantage of the present disclosure includes improved heat transfer in comparison to single phase heat capacitors.

Another advantage of the present disclosure includes cost efficiencies associated with decreased material costs resulting from inclusion of pebbles and/or sand within a liquid polymer mixture.

Another advantage of the present disclosure includes heat capacity match, and therefore efficiency of the regenerator being improved at multiple temperatures of operation due to the match of the temperature of phase change of all or a portion of a liquid polymer mixture with that of the heat capacity peak of the pressurized atmospheric gas.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

FIG. 1 shows a schematic diagram of an exemplary embodiment of a regeneration system according to the disclosure.

FIG. 2 shows a schematic diagram of an exemplary embodiment of a regeneration system according to the disclosure.

FIG. 3 shows a schematic diagram of an exemplary embodiment of a regeneration system according to the disclosure.

FIG. 4 shows a schematic diagram of an exemplary embodiment of a regeneration system according to the disclosure.

FIG. 5 shows a schematic diagram of an exemplary embodiment of a regeneration system according to the disclosure.

FIG. 6 shows a schematic diagram of an enlarged view of a liquid polymer mixture for a regenerator according to an exemplary embodiment of the disclosure.

### DETAILED DESCRIPTION OF THE INVENTION

Provided is a regenerator, a regeneration process, and a liquid polymer mixture for a regenerator wherein a liquid polymer remains in contact with a conductive solid material during a first operational period and a second operational period of the regeneration process. The regenerator, the regeneration process, and the liquid polymer mixture involve a liquid polymer substantially resistant to peeling off from a thermally conductive solid material and forming gaps. Embodiments can extend life of the regenerator by reduced or eliminated peeling off of the heat capacitor from regenerator tubes, improve heat transfer in comparison to single phase heat capacitors, include cost efficiencies associated with decreased material costs resulting from inclusion of pebbles and/or sand within a liquid polymer mixture, and/or can include improved heat transfer being at multiple temperatures of operation due to the phase change of all or a portion of a liquid polymer mixture within the regenerator. As used herein, the phrase "peeling off' and grammatical equivalents thereof refers to a loss of adhesion thereby reducing heat transfer.

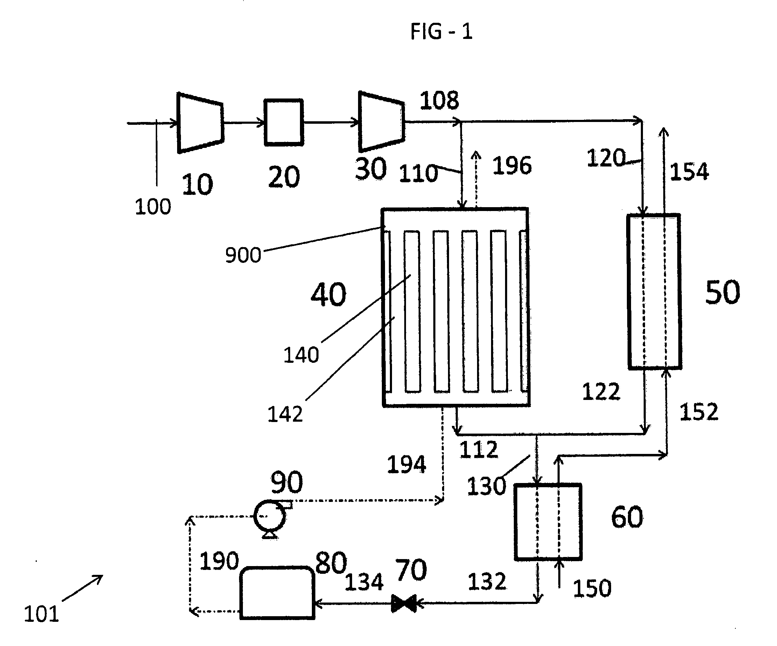

The regenerator 40 can be part of any suitable regeneration system and/or can be configured for any suitable regeneration system. For example, as shown in the schematic diagram of FIG. 1, the regenerator 40 can be part of a system 101 for repeated periodic cooling, storing, and heating of atmospheric gas.

As used herein, the term "atmospheric gas" refers to a gas that primarily contains nitrogen, argon, oxygen, or combinations thereof. In one embodiment, the atmospheric gas is a mixture of nitrogen, argon, and oxygen. In one embodiment, the oxygen content can be above about 20.95% by volume. In one embodiment, the argon content can be above about 0.93% by volume. As used herein, the term "regenerator" refers to a fixed body with flow features and a heat capacity operated as a periodic heat transfer device providing cooling when operated in a first operational mode and providing heating in a second operational mode. As used herein, the term "non-combustible" refers to a material that will not combust in the presence of air.

In general, a stream flows through the flow features (for example, flow channels) of a regenerator in a first direction during a first operational period (for example, an off-peak demand period when the price of electricity is generally lower) and during the first operational mode. In the first operational mode, the regenerator receives heat from at least a portion of the stream directed into the regenerator. This transfer of heat cools the stream to below a predetermined temperature to form a stream that is directed from the regenerator. During a second operational period (for example, an on-peak demand period when the price of electricity is generally higher), the same regenerator can be operated in a second operational mode. In the second operational mode, a pressurized liquefied atmospheric gas stream is directed through the regenerator that provides heat to the pressurized liquefied atmospheric gas stream. The first operational period and the second operational period can repeat multiple times as cycles and the cycles can be repeatedly performed. The first operational period can be during periods of lower energy demand and the second operational period can be during periods of higher energy demand.

As a regenerator is subject to cycles of operation during the first operational period and the second operational period, the ability of the regenerator to transfer or receive heat is provided according to a temperature profile. That is, the regenerator has a predetermined ability to transfer or receive heat during the first operational period and provide heat during the second operational period. After a predetermined number of cycles, the temperature profiles of the regenerator at the fixed phases in the cycle of the present disclosure remain substantially constant. With the temperature profiles at the fixed phases being substantially constant, the temperature of the regenerator does not substantially increase over cycles of operational periods.

A regenerator can be arranged in series with one or more additional regenerators and/or the regenerator can be arranged in parallel with one or more additional regenerators. In one embodiment, the arrangement can reduce longitudinal heat transfer (longitudinal heat transfer being the heat transfer in the direction of flow) by connecting several regenerator beds in series. In including a plurality of regenerators, it is desirable that different regenerators are configured for different values of predetermined parameters (for example, pressure ranges, temperature ranges, and/or flow ranges).

As shown in FIG. 1, a regeneration system 101 and regeneration method can involve an atmospheric gas stream 100 being pressurized to above a predetermined pressure to form a supercritical atmospheric gas stream 108. The predetermined pressure can be about the critical pressure for atmospheric gas within the atmospheric gas stream 100. The atmospheric gas stream 100 can be directed through an air compressor 10. Impurities (for example, water vapor, carbon dioxide, and/or other impurities) can be removed by an air purifier 20. Further pressurizing can be achieved by a booster compressor 30. In one embodiment, the booster compressor 30 can include intercoolers (not shown) and an aftercooler (not shown).

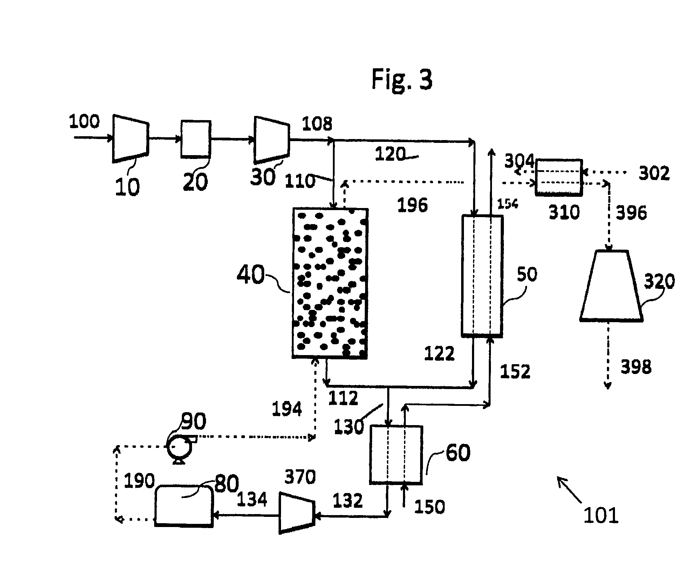

During the first operational period, the first cooled stream 112 and the second cooled stream 122 are arranged to be directed to form the combined cooled stream 130. The combined cooled stream 130 is further cooled by a liquefied atmospheric gas or another external cryogenic stream 150 in a second indirect heat exchanger 60. The second indirect heat exchanger 60 is configured for a lower temperature than the first indirect heat exchanger 50. The liquid air or another external cryogenic stream 150 can be provided at a predetermined pressure (for example, slightly above ambient atmospheric pressure). Upon being cooled, the combined cooled stream 130 forms a further cooled stream 132. The further cooled stream 132 is expanded to form a liquefied atmospheric gas stream 134, which is stored at a lower pressure in atmospheric gas storage tank 80 (for example, slightly above ambient atmospheric pressure). In one embodiment, the further cooled stream 132 is expanded by an expansion valve 70. In an alternate embodiment, as shown in FIG. 3, the further cooled stream 132 can be expanded by a dense fluid expander 370. In the alternate embodiment, the liquefied atmospheric gas or another external cryogenic stream 150 can be heated in the indirect heat exchanger 60 and then heated in the indirect heat exchanger 50.

Other suitable sources of cooling may additionally or alternatively be used. For example, external refrigeration may be provided to the first cooled stream 112, the second cooled stream 122, the liquid air or another external cryogenic stream 150, the externally cooled stream 130, the further cooled stream 132, the liquefied atmospheric gas stream 134, the liquid atmospheric gas stream 190, and/or the pressurized liquid atmospheric gas stream 194. In one embodiment, additional or alternative cooling is provided to one or more streams associated with the regenerator from a non-combustible source. In one embodiment where refrigeration is supplemented to the regeneration system by an external source of refrigeration, the external refrigeration permits cooling below the critical temperature. Such a supply of supplemental refrigeration at a temperature that is below the critical temperature of the atmospheric gas from an external source allows extended operation of the regeneration cycle. For example, including the external refrigeration below the critical temperature of the atmospheric gas can extend operational sustainability by a duration of months or years. Introducing liquid nitrogen, liquid air, and/or adding a cryogenic refrigerator that produces refrigeration at a temperature or temperatures below the critical temperature of the atmospheric gas into the process can provide such external refrigeration. In one embodiment, a portion or all of the cooling in the regeneration system is performed using a non-combustible material. For example, fluids used in cooling of the refrigeration system are all non-combustible. As used herein, the term "non-combustible fluid" can include air, argon, nitrogen, oxygen, helium, xenon, and combinations thereof.

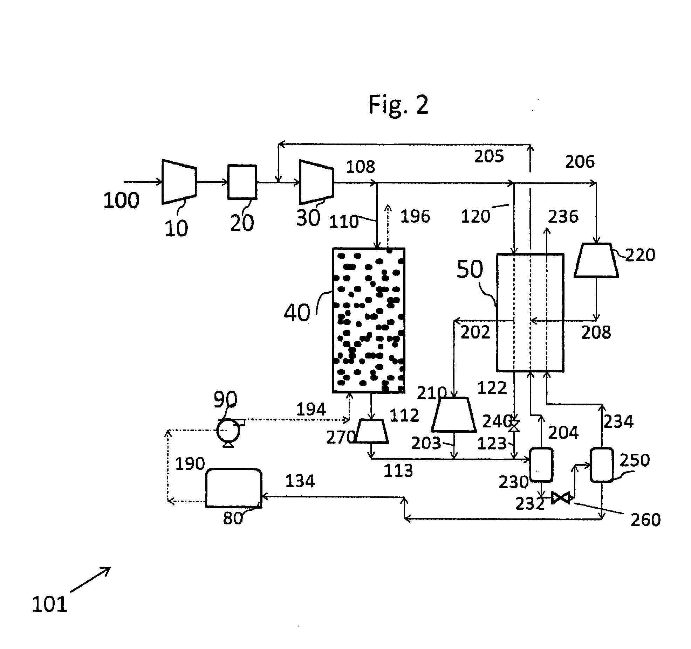

FIG. 2 shows a schematic diagram of regeneration system 101 according to a further embodiment of the disclosure. As in the embodiment shown in FIG. 1, supercritical atmospheric gas stream 108 is divided into a first stream 110 and a second stream 120. In this embodiment, a supercritical atmospheric gas stream 202 (for example, a portion of the second stream 120 that is cooled to a predetermined temperature) is directed from within the indirect heat exchanger 50 to an expander 210. An exhaust stream 203 (which may be a two-phase stream) is directed from the indirect heat exchanger 50 to a phase separator 230. The phase separator 230 directs a vapor stream 204 to the indirect heat exchanger 50. The indirect heat exchanger 50 transfers heat to the vapor stream 204 to form a heated atmospheric gas stream 205. The heated atmospheric gas stream 205 is at an increased temperature (for example, about ambient temperature) and a predetermined pressure (for example, above about 90 psia). The heated atmospheric gas stream 205 can be recycled by suction of the booster compressor 30 or other purposes such as for feeding to a cryogenic air separation unit.

In addition to the first stream 110 and the second stream 120, the supercritical atmospheric gas stream 108 can be divided into the third stream 206, which can be smaller than the first stream 110 and the second stream 120. The third stream 206 is directed to a second expander 220. The second expander 220 can be configured for a higher temperature than expander 210 and can substantially balance heat supply with heat absorption at a plurality of temperatures in the indirect heat exchanger 50. The second expander 220 expands the third stream 206 to form an expander exhaust stream 208. The expander exhaust stream 208 is directed to the indirect heat exchanger 50 to combine with vapor stream 204 after it is partially heated within the indirect heat exchanger 50, thereby forming heated atmospheric gas stream 205 upon further heating in the indirect heat exchanger 50. The heated atmospheric gas stream 205 is at about ambient temperature or above ambient temperature. The heated atmospheric gas stream 205 is recycled to the suction of the booster compressor 30.

The second stream 120 (including a portion of the supercritical atmospheric gas stream 108) can be directed to an indirect heat exchanger 50 during the first operational period. The indirect heat exchanger 50 cools at least a portion of the second stream 120 to form a second cooled stream 122. In one embodiment, cooling is provided by a liquid air or liquid nitrogen stream 152 (see FIG. 1). In other embodiments, the indirect heat exchanger 50 may be substituted with any suitable external refrigeration source.

The indirect heat exchangers 50 and 60 can cool the supercritical atmospheric gas stream 108, the first stream 110, the second stream 120, the first cooled stream 112, the combined cooled stream 130, or a combination thereof, to form a further cooled stream 132. As used herein, the term "further cooled" refers to cooling provided from a source other than the regenerator 40. For example, FIG. 1, shows the combined cooled stream 130 and the second stream 120 being cooled by external cryogenic stream 150 (which can provide refrigeration to both indirect heat exchangers 50 and 60). Additionally or alternatively, cooling can be provided by expanding a high pressure gas stream (not shown) to a temperature below the critical temperature for the atmospheric gas. In one embodiment, in-line cooling to form the combined cooled stream 130 can be provided by cooling the supercritical atmospheric gas stream 108, the first stream 110, the first cooled stream 112, or a combination thereof. Specifically, the first cooled stream 112 can be cooled by the external refrigeration source to form the combined cooled stream 130. In this embodiment, the external refrigeration source can be a Sterling refrigerator, a Gifford-McMahon refrigerator, a pulse tube refrigerator, a thermoacoustic refrigerator, a magnetic refrigerator, a combination thereof, or any other suitable refrigeration source.

During the first operational period, the first cooled stream 112 and the second cooled stream 122 are arranged to be directed to form the combined cooled stream 130. The combined cooled stream 130 is further cooled by a liquefied atmospheric gas or another external cryogenic stream 150 or an external source of refrigeration in a second indirect heat exchanger 60 (see FIG. 3). The second indirect heat exchanger 60 is configured for a lower temperature than the first indirect heat exchanger 50. The liquid air or another external cryogenic stream 150 can be provided at a predetermined pressure (for example, slightly above ambient atmospheric pressure). Upon being cooled, the combined cooled stream 130 forms a further cooled stream 132. The further cooled stream 132 is expanded to form a liquefied atmospheric gas stream 134, which is stored at a lower pressure in storage tank 80 (for example, slightly above ambient atmospheric pressure). In one embodiment, the further cooled stream 132 is expanded by an expansion valve 70. In an alternate embodiment, the further cooled stream 132 can be expanded by a dense fluid expander. In the alternate embodiment, the liquid air or another external cryogenic stream 150 (which can be a source of external refrigeration in this process) can be heated in the indirect heat exchanger 60 and then heated in the indirect heat exchanger 50.

During the second operational period (illustrated by the dashed/dotted-line portions of FIGS. 1-5), a liquid atmospheric gas stream 190 is directed from the storage tank 80 and pressurized (for example, by pressure increasing device 90) to form a pressurized liquid atmospheric gas stream 194. The pressurized liquid atmospheric gas stream 194 is directed to the regenerator 40 and is heated to about ambient temperature or above ambient temperature. In one embodiment, the pressure of the liquid air is lower (for example, by about 5-50 psi) than the first stream 110 of the atmospheric gas directed into the regenerator 40.

Other suitable sources of cooling may additionally or alternatively be used. For example, external sources may provide additional streams cooled to a temperature below the critical temperature of the atmospheric gas that can be blended with the first cooled stream 112, the second cooled stream 122, the liquid air or another external cryogenic stream 150, the combined cooled stream 130, the further cooled stream 132, the liquefied atmospheric gas stream 134, the liquid atmospheric gas stream 190, and/or the pressurized liquid atmospheric gas stream 194.

Additionally, in one embodiment, the supercritical atmospheric gas stream 108 can be divided into a first stream 110 and a second stream 120 (see FIGS. 1-5). As discussed below, the supercritical atmospheric gas stream 108 can also be divided into a third stream 206 (see FIG. 2). The flow in third stream 206 is generally smaller than the flow in the first stream 110 and the second stream 120. In this embodiment, a supercritical atmospheric gas stream 108 of the second stream 120 is directed from within the indirect heat exchanger 50 to an expander (not shown). The expander is configured for a lower temperature than the indirect heat exchanger 50. An exhaust stream (not shown) (which may be a two-phase stream) is directed from the indirect heat exchanger 50 to a phase separator 230. The phase separator 230 is configured to operate under higher pressure than the expander 210. The phase separator 230 directs a vapor stream 204 to the indirect heat exchanger 50. The indirect heat exchanger 50 transfers heat to the vapor stream 204 to form a heated atmospheric gas stream 205. The heated atmospheric gas stream 205 is at an increased temperature (for example, about ambient temperature) and a predetermined pressure (for example, above about 90 psia). The heated atmospheric gas stream 205 can be recycled to the inlet of the booster compressor 30 or other purposes such as for feeding to a cryogenic air separation unit.

Referring to FIG. 2, the third stream 206 is directed to a second expander 220. The second expander 220 can be configured for a higher temperature than expander 210 and can substantially balance heat supply with heat absorption at a plurality of temperatures in the indirect heat exchanger 50. The second expander 220 expands the third stream 206 to form an expander exhaust stream 208. The expander exhaust stream 208 is directed to the indirect heat exchanger 50 to combine with vapor stream 204 within the indirect heat exchanger 50, thereby forming heated atmospheric gas stream 205. The heated atmospheric gas stream 205 is at about ambient temperature of above ambient temperature. The heated atmospheric gas stream 205 is recycled to the inlet of the booster compressor 30.

In the embodiment, the first cooled stream 112 is expanded by a dense fluid expander 270 and the second cooled stream 122 is expanded by a throttle valve 240. The first cooled stream 112, the second cooled stream 122, and the exhaust stream 203 directed from the indirect heat exchanger 50 are combined and directed to the phase separator 230 to form a combined cooled stream (for example, liquid stream 232). The liquid stream 232 is directed from the phase separator 230, further expanded by a throttle valve 260, and directed to a second phase separator 250. The second phase separator 250 operates at a lower pressure than the first phase separator 230. The second phase separator 250 forms a nitrogen-rich vapor stream 234 that is directed to the indirect heat exchanger 50. In the indirect heat exchanger 50, the nitrogen-rich vapor stream 234 receives heat from second stream 120 and forms a second nitrogen-rich vapor stream 236. The second nitrogen-rich vapor stream 236 is vented or directed to further processes. Liquid from the second phase separator 250 forms the liquefied atmospheric gas stream 134 and is directed to the liquid atmospheric gas storage tank 80.

Referring to FIG. 3, in another embodiment, a regenerator-heated atmospheric gas stream 196 (including atmospheric gas) is directed from the regenerator 40 to an indirect heat exchanger 310 to form a heated stream 396. The indirect heat exchanger transfers heat from an exhaust stream 302 of a gas turbine (not shown) to the regenerator-heated atmospheric gas heated stream 196. The gas turbine can be used for generating electricity during the second operational period (peak operation). The heated stream 396 is directed to an expander 320 to form an expanded stream 398 and generate power. In one embodiment, operation of the system 101 includes directing streams having approximately the compositions listed in Table 1.

**Table 1**

| Composition (mol%) | | | | | | | | |
|---|---|---|---|---|---|---|---|---|
| | N₂ | Ar | O₂ | CO₂ | H₂O | P | T | Flow |
| | | | | | | (psia) | (F) | (1bmol/h) |
| Stream | | | | | | | | |
| | | | | | | | | |
| 100 | .7812 | .0093 | .2095 | 0 | 0 | 14.69 | 90 | 6500 |
| 110 | .7812 | .0093 | .2095 | 0 | 0 | 849 | 100 | 6402.5 |
| 120 | .7812 | .0093 | .2095 | 0 | 0 | 849 | 100 | 97.5 |
| 112 | .7812 | .0093 | .2095 | 0 | 0 | 845 | -311.5 | 6402.5 |
| 132 | .7812 | .0093 | .2095 | 0 | 0 | 844 | -317.5 | 6500 |
| 134 | .7812 | .0093 | .2095 | 0 | 0 | 15 | -317.5 | 6500 |
| 150 | 1 | 0 | 0 | 0 | 0 | 15.5 | -319.6 | 228 |
| 154 | 1 | 0 | 0 | 0 | 0 | 15 | -29.0 | 6500 |
| 194 | .7812 | .0093 | .2095 | 0 | 0 | 845 | -312.29 | 6500 |
| 196 | .7812 | .0093 | .2095 | 0 | 0 | 845 | -312.29 | 6500 |
| 396 | .7812 | .0093 | .2095 | 0 | 0 | 840 | 88.15 | 6500 |
| 398 | .7812 | .0093 | .2095 | 0 | 0 | 14.7 | 97.44 | 6500 |
| 302 | .74756 | .00890 | .11435 | .04306 | .08612 | 15 | 900 | 6689.3 |
| 304 | .74756 | .00890 | .11435 | .04306 | .08612 | 14.7 | 165.7 | 6689.3 |

In this embodiment, work by the compressor 10 and booster compressor 30 can be about 11,903 kW, work by the expander 320 can be about -10006 kW, and work by the dense fluid expander 370 can be about -88 kW. In this embodiment, the flow conditions, work inputs, and/or work outputs are based on the same flow duration the second operational period (peak operation) and the first operational period (off-peak operation). In other embodiments, the duration of the first operational period and the duration of the second operational period differ. For example, the first operational period (off-peak operation) can be 10 hours while the second operational period (peak operation) can be 6 hours. In this embodiment, the flow amounts of the streams 100, 110, 120, 112, and 132 during the first operational period, or a flow amount of streams 150, 154, 194, 196, 396, 398, 302, and 304 and an amount of work of the expander 320 and/or the dense fluid expander 370 during the second operational period can be adjusted. For example, the adjustment can include reducing the flow amounts of the streams 100, 110, 120, 112, and 132 by multiplying by a factor of 0.6 and reducing the amount of work of the compressor 10 by multiplying the same factor. In this embodiment, the flow amount of liquid nitrogen in stream 150 is about 3.5% of the flow amount of the regenerator-heated atmospheric gas heated stream 196.

In one embodiment, the expanded stream 398 directed from the expander 320 is directed to an air separator system. In another embodiment, the expanded stream 398 is directed to a data center as a source of cooling. For example, computers in a data center may be maintained by air of a predetermined temperature and/or a predetermined relatively low humidity. In one embodiment, the expanded stream 398 is within a predetermined temperature range. The expanded stream 398 can be blended with air to form a stream with a desired temperature and/or a desired humidity. This use of the expanded stream 398 in the data center can reduce or eliminate the need for refrigeration during the peak electricity demand hours.

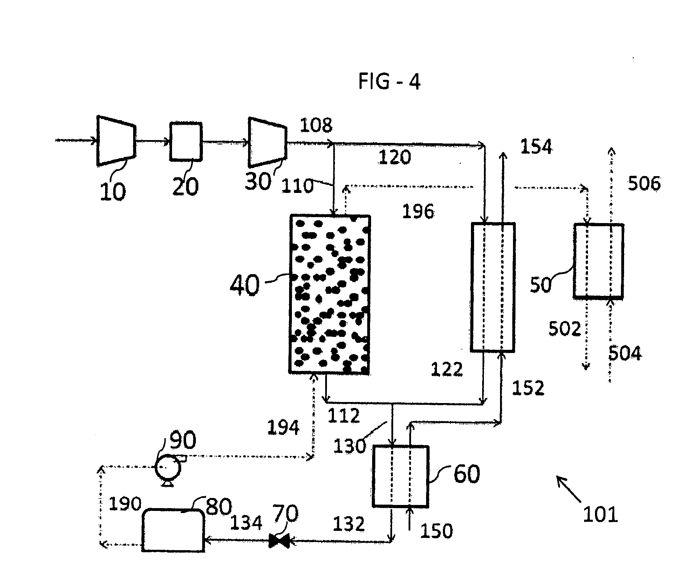

Referring to FIG. 4, in another embodiment, regenerator-heated atmospheric gas heated stream 196 can be directed from the regenerator 40 to an indirect heat exchanger 50 of a cryogenic air separation plant (not shown). The indirect heat exchanger 50 is a "pumped LOX heat exchanger" which can be used to heat a pumped liquid oxygen from a cryogenic air separation plant. The indirect heat exchanger 50 transfers heat from regenerator-heated atmospheric gas heated stream 196 to a liquid oxygen stream 504 directed to the indirect heat exchanger 50. Upon being heated, the liquid oxygen stream 504 forms a gaseous or supercritical oxygen stream 506, which is sent to an oxygen consuming process. Upon being cooled, regenerator-heated atmospheric gas heated stream 196 forms a cooled stream 502 and is used in a cryogenic air separation plant.

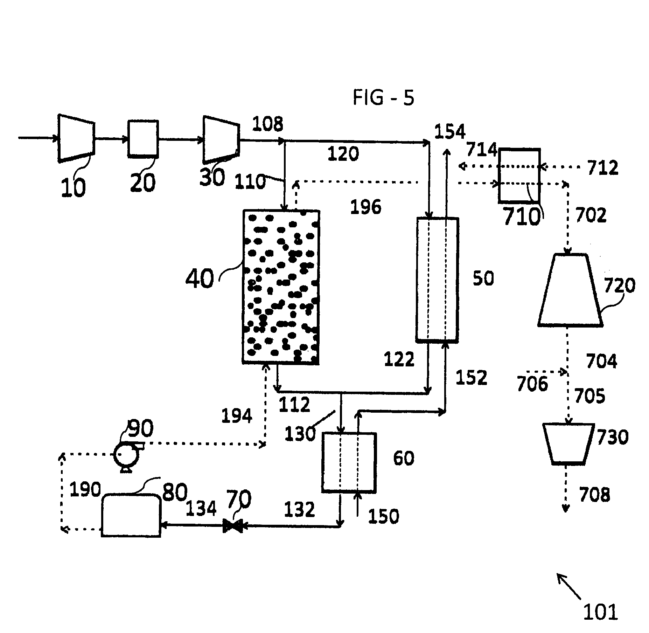

Referring to FIG. 5, in another embodiment, the regenerator-heated atmospheric gas heated stream 196 directed from the regenerator 40 is heated by an exhaust gas stream 712 of a gas turbine. The exhaust gas stream 712 forms a cooled stream 714, which can be vented or used in another process. The regenerator-heated atmospheric gas heated stream 196 forms a heated stream 702 that is directed to the expander 720 forming a feed stream 705. The feed stream 705 can be directed a gas turbine compressor 730 after injection of a water stream 706 to further cool atmospheric gas in the gas turbine compressor 730 (for example, by evaporative cooling), thereby forming a compressed air-like stream 708 that is sent to the combustor (not shown) of the gas turbine (not shown). In one embodiment, the feed stream 705 is directed to an air separation system (not shown).

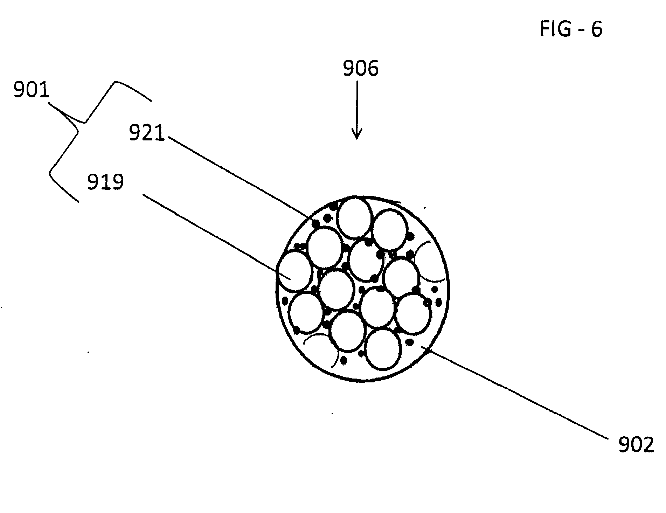

Referring again to FIG. 1, the fixed body of the regenerator 40 includes a vessel 900, a thermally conductive solid material 140 within the vessel 900, and a plurality of channels 142. The vessel 900 is configured to receive and/or direct one or more fluids to be periodically cooled (for example, the first stream 110 from the supercritical atmospheric gas stream 108) and/or one or more fluids to be periodically heated (for example, a regenerator-heated atmospheric gas heated stream 196 such as a pressurized liquefied atmospheric gas stream). The thermally conductive solid material 140 separates a liquid polymer 902 (or liquid polymer mixture 906) (see FIG. 6) from the fluids periodically cooled and/or heated in the vessel 900. Referring to FIG. 6, in one embodiment, the liquid polymer 902 and heat capacitor materials 901 are combined to form a liquid polymer mixture 906. Although FIG. 6 shows the liquid polymer mixture 906, it will be understood that the vessel 900 may include the liquid polymer 902 being substantially devoid of other materials (for example, the heat capacitor materials 901).

Referring again to FIG. 1, the vessel 900 and/or the thermally conductive solid material 140 within the vessel 900 can include features for increased heat transfer between the liquid polymer 902 (or the liquid polymer mixture 906, both shown in FIG. 6) and the one or more fluids periodically cooled and/or heated in the regenerator 40. One or more channels 142 (or tubes) within the vessel 900 of the regenerator 40 can include one or more heat transfer features. For example, the vessel 900 can be configured similar to a shell-and-tube heat exchanger. Such a configuration can include finned tubes and/or finned plates forming the channels 142. The channels 142 can include or be attached to other suitable internal structures for improving heat transfer. For example, the channels 142 can include a fixed bed of granule-sized quartz rock for increased residence time for the fluid and, thus, increased heat transfer. The vessel 900 can include one or more corrugated sheets, perforation, serrations, one or more substantially straight tubes, one or more curved tubes (for example, helically coiled tubes, spirally coiled tubes, and other coiled tubes), other suitable tubes, plates, fins, and/or channels, and combinations thereof.

Additionally or alternatively, the channel(s) 142 can be formed of the thermally conductive solid materials 140, thereby promoting heat transfer (for example, a thermally conductive solid material such as metal, notably aluminum, copper, and stainless steel). For example, the thermally conductive solid material 140 can be formed by materials capable of cooling and heating a gas from a cryogenic temperature (for example, -320° F (-196° C) and to a predetermined temperature (for example, a temperature permitting the regenerator-heated atmospheric gas heated stream 196 to be used in the above-described applications, such as 68° F (20° C)).

The liquid polymer 902 can be liquid above a predetermined temperature (for example, about -200° F (-129° C)). The liquid polymer 902 is in liquid form at least during much of the first and second operational periods. Being a liquid permits the liquid polymer 902 to reduce or eliminate peeling off and/or formation of gaps from the vessel 900, channels 142, and/or thermally conductive solid material 140, thereby maintaining a desired contact and a desired capability for heat transfer between the fluid periodically cooled and/or heated and the liquid polymer 902 or liquid polymer mixture 906.

In one embodiment, the liquid polymer 902 can be a silicone (polysiloxanes) that is liquid at the predetermined temperature. The liquid polymer 902 can be selected to provide a predetermined viscosity at the predetermined temperature (for example, below about 100 centipoises at 68° F (20° C)). The liquid polymer 902 can be selected to maintain a liquid form over a predetermined temperature range. For example, the liquid polymer 902 can be or include polydimethylsiloxane. Polydimethylsiloxane becomes a solid material through glass transition and has a glass transition temperature (Tg) of about -193° F (-125° C) (which is similar to the critical temperature of air which is about -200° F (-129° C)). The liquid polymer 902 including polydimethylsiloxane can, thus, permit heat capacity-temperature curves of the liquid polymer 902 (or the liquid polymer mixture 906) to correspond to the capacity-temperature curves of the supercritical atmospheric gas stream 108 or any other suitable atmospheric gas. The liquid polymer 902 can be selected to provide any other suitable properties. For example, the liquid polymer 902 may be selected based upon being non-toxic and/or relatively inflammable.

Likewise, the composition of the liquid polymer 902 can be selected to permit heat capacity-temperature curves of the liquid polymer 902 (or the liquid polymer mixture 906) to correspond to the capacity-temperature curves of other supercritical atmospheric gases and/or gas streams. For example, polymers shown in Table 1, (or polymers shown in Table 1 combined with other suitable materials to form the liquid polymer mixture 906) can be selected and/or combined to correspond with any suitable atmospheric gas. Additionally or alternatively, polymers shown in Table 1 (or polymers shown in Table 1 combined with other suitable materials forming the liquid polymer mixture 906) can be selected to provide a desired viscosity and/or a reduced cost.

**TABLE 1**

| Polymer | Tg (K) | Tg (°C) | Tg (°F) |
|---|---|---|---|
| Poly(dimethylsiloxane) | 146 | -125 | -193 |
| poly(hydrogen methyl) siloxane | 135 | -138 | -216.4 |
| Poly(ethylmethyl) siloxane | 138 | -135 | -211 |
| Polyethylene | 148 | -125 | -193 |
| Poly(propylmethylsiloxane) | 153 | -120 | -184 |
| Poly(thiodifluoromethylene) | 155 | -118 | -180.4 |
| Poly(oxytetramethyleneoxyadipoyl) | 155 | -118 | -180.4 |
| Poly(cis-1 pentenylene) | 159 | -114 | -173.2 |
| Poly(phenylmethylsiloxane) | 187 | -86 | -122.8 |
| poly(trifluoropropylmethyl siloxane) | 203 | -70 | -94 |
| Poly(diethylsiloxane) | 201 | -72 | -97.6 |
| Polydimethylsilazane | 191 | -82 | -115.6 |
| Poly(dimethylsilmethylene) | 173 | -100 | -148 |
| Poly(dimethylsilpropylene) | 203 | -70 | -94 |
| Poly(isobutylene) | 200 | -73 | -99.4 |

In one embodiment, the heat capacitor materials 901 are combined with liquid polymer 902 to form the liquid polymer mixture 906. The liquid polymer mixture 906 can be within the vessel 900 and contained by the thermally conductive solid material 140 to maintain separation between the liquid polymer mixture 906 and the fluid periodically cooled and/or heated within the regenerator 40. Referring to FIG. 6, the heat capacitor materials 901 can be fully immersed within the liquid polymer 902 to form the liquid polymer mixture 906. The heat capacitor materials 901 can include solid heat capacitor materials. For example, the heat capacitor materials 901 can include rocks 919, sand 921, a combination of rocks 919 and sand 921, or any other suitable material. In one embodiment, the material includes or consists of rocks and/or sand of high volumetric heat capacities (for example, quartz, certain iron ores, etc.). In one embodiment, the heat capacitor materials 901 are combined with polydimethylsiloxane to form a reduced cost liquid polymer mixture 906. For example, to reduce the cost of the material within the regenerator 40, rocks and sand may be blended into the liquid polymer 902. As used herein, the phrase "reduced cost" refers to a comparison of a price per volume of liquid polymer mixture 906 having the heat capacitor materials 901 versus a price per volume of the liquid polymer 902.

Referring to the liquid polymer mixture 906 shown in FIG. 6, the heat capacitor materials are shown as rocks 919, sand 921, and the liquid polymer 902. In this embodiment, the liquid polymer 902 occupies space between the rocks 919 and sand 921. In one embodiment, the rocks 919 and/or sand 921 may vary in size and/or shape. In one embodiment, an average dimension (for example, the diameter) of the rocks 919 is more than about 2.5 times an average dimension (for example, the diameter) of the sand 921 and/or the volume of the rocks 919 is more than about 2.5 times the volume of the sand 921. In one embodiment, the heat capacitor materials 901 and the liquid polymer 902 form a rock-sand-silicone mixture (the liquid polymer mixture 906) having a volumetric ratio of about 10-3-1.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A regenerator for periodic cooling, storing, and heating of atmospheric gas, the regenerator comprising:
a vessel;
a liquid polymer within the vessel; and
a thermally conductive solid material arranged and disposed to separate the liquid polymer from a fluid to be heated, cooled, or heated and cooled within the vessel;
wherein the liquid polymer remains in contact with the thermally conductive solid material during a first operational period and a second operational period of a regeneration process.

2. The regenerator of claim 1, wherein the thermally conductive solid material is a metal.

3. The regenerator of claim 1 or 2, further comprising heat capacitor materials, the heat capacitor materials being in contact with the liquid polymer.

4. The regenerator of claim 3, wherein the heat capacitor materials are selected from the group consisting of rocks, sand, and a combination thereof.

5. The regenerator of any of the preceding claims, wherein the thermally conductive solid material includes at least one finned tube and/or at least one finned plate.

6. The regenerator of any of the preceding claims, wherein the liquid polymer is polydimethylsiloxane.

7. The regenerator of any of the preceding claims, wherein the liquid polymer has a viscosity of less than about 100 centipoises at 68° F (20° C).

8. A regeneration process for periodic cooling, storing, and heating of atmospheric gas, the process comprising:
directing a first stream to a regenerator for cooling to form a cooled stream during a first operational period;
directing a second stream to the regenerator for heating to form a heated stream during a second operational period;
wherein the regenerator comprises:
a vessel;
a liquid polymer within the vessel; and
a thermally conductive solid material arranged and disposed to separate the liquid polymer from a fluid to be heated, cooled, or heated and cooled within the vessel;
wherein the liquid polymer remains in contact with the thermally conductive solid material during the first operational period and the second operational period of the regeneration process.

9. The process of claim 8, wherein the atmospheric gas stream is air.

10. The process of claims 8 or 9, wherein the thermally conductive solid material is a metal.

11. The process of any of claims 8 to 10, wherein the regenerator further comprises heat capacitor materials, the heat capacitor materials being in contact with the liquid polymer.

12. The process of claim 11, wherein the heat capacitor materials are selected from the group consisting of rocks, sand, and a combination thereof.

13. The process of any of claims 8 to 12, wherein the thermally conductive solid material includes at least one finned tube and/or at least one finned plate.

14. The process of any of claims 8 to 13, wherein the liquid polymer is polydimethylsiloxane.

15. The process of any of claims 8 to 14, wherein the liquid polymer has a viscosity of less than about 100 centipoises at 68° F (20° C).

16. A liquid polymer mixture for a regenerator, the liquid polymer mixture comprising:
heat capacitor materials, selected from the group consisting of rocks, sand, and a combination thereof; and
a liquid polymer;
wherein the liquid polymer remains in contact with the thermally conductive solid material during a first operational period and a second operational period of a regeneration process.

17. The liquid polymer mixture of claim 16, wherein the liquid polymer is polydimethylsiloxane.

18. The liquid polymer mixture of claims 16 or 17, wherein the liquid polymer has a viscosity of less than about 100 centipoises at 68° F (20° C).
